# EUROPEAN PATENT APPLICATION

(11) **EP 4 730 140 A1**
(43) Date of publication of application: **22.04.2026**
(21) Application number: 25208173.2
(22) Date of filing: 13.10.2025
(51) Int. Cl.: G06F 11/3604, G06F 8/75

(54) **METHOD AND SYSTEM TO PERFORM INTERVAL ANALYSIS IN SOURCE CODE USING FUNCTIONAL APPROACH**

(30) Priority: 17.10.2024 IN 202421079091
(71) Applicant: Tata Consultancy Services Limited, Maharashtra (IN)
(72) Inventor: CHIMDYALWAR, Bharti Dewrao, 411028 Pune, Maharashtra (IN); SHAH, Punit, Yokohama, Kanagawa, 2206014 (JP); KUMAR, Shrawan, 411028 Pune, Maharashtra (IN)
(74) Representative: Goddar, Heinz J.

(57) **Abstract**

This disclosure relates generally to method and system to perform interval analysis in source code using functional approach. The method performs data-flow analysis using functional approach to solve infinite-height analyses and properties are validated such as array index within bounds, non-zero division, and preventing arithmetic overflow or underflow on real-life applications. The method receives source code comprising one or more functions to perform a whole program interval analysis over each function using a functional approach to identify range interval of each variable at every program point in the source code. Further, summary for each function is computed which is stored in the form of variable and its corresponding range interval at every exit point of each function. Finally, an incremental interval analysis is performed over each function having edited version change and summary is recomputed for each function impacted by change to optimize overall interval analysis.

## Description

### CROSS-REFERENCE TO RELATED APPLICATIONS AND PRIORITY

The present application claims priority from Indian application no. 202421079091, filed on October 17, 2024.

### TECHNICAL FIELD

The disclosure herein generally relates to source code analysis, and, more particularly, to method and system to perform interval analysis in source code using functional approach.

### BACKGROUND

Abstract interpretation-based static analysis of source code is crucial for fast, precise, and scalable detection of critical errors such as array index out-of-bounds, division by zero, overflow, and underflow. Various static analyzers implement different abstract domains for value analysis. However, achieving fast, sound, and scalable analysis of real-world industrial applications remains challenging, especially in the era of continuous integration and continuous development (CI/CD). The need of the hour is incremental analysis to meet these demands. Existing tools have demonstrated usability in performing whole program analysis but lack in incremental analysis.

Existing inter-procedural Data flow analysis (DFA) frameworks perform summary-based analysis but are limited to finite domains and cannot handle infinite-height domains. While functional approaches utilizing function summaries can perform analyses with infinite-height domains and make them incremental by utilizing cached analysis information from previous versions, this remains largely unexplored area.

In another existing interactive abstract interpretation and incremental abstract interpretation provides solution for analysis with infinite domain and adaptable incremental analysis. Approach, interactive abstract interpretation creates demanded abstract interpretation graph (DIAG) for each function and demanded summarization graph (DSG) to connect these DIAGs. However, DSGs become large complex for real-life programs limiting scalability. Moreover, this approach limits its analysis for specified Java open-source programs. Approach, incremental abstract interpretation struggles with incremental changes to global variables and has only been tested on small codebases (up to 5KLoC). Moreover, none of these approaches showcase reporting impacted alarms, raising concerns about their applicability in reducing the efforts of static analysis users when verifying evolving software.

Static analysis tool enabling scalability and effectiveness on industry applications in applicant's Indian patent application No. 201821021741, filed on June 11, 2018, titled method and system for verifying properties of source code. This software verification tool provides high scalability by performing data-flow analysis (DFA) using functional approach in two phases. Phase 1 computes summaries for each function by traversing the call graph in bottom-up order (callees to callers). Phase 2 computes data-flow values at program points by traversing the call graph once in top-down order. However, while inter-procedural DFA with high scalability is applied to solve distributive analyses over finite domains in the above work it is not explored for functional approach in infinite-height domains.

### SUMMARY

Embodiments of the present disclosure present technological improvements as solutions to one or more of the above-mentioned technical problems recognized by the inventors in conventional systems. For example, in one embodiment, a method to perform interval analysis is source code using functional approach is provided. The method includes obtaining a source code comprising one or more functions. Whole program interval analysis is performed over each function using a functional approach comprising a (i) one bottom-up analysis and (ii) a multi top-down analysis to identify range interval of each variable at every program point in the source code. Further, a summary for each function is computed and the summary of each function is stored in the form of variable and its corresponding range interval at every exit point of each function. Finally, an incremental interval analysis is performed over each function of the source code having edited version change, and recomputing summary for each function potentially impacted by change to optimize overall interval analysis.

In another aspect, a system to perform interval analysis in source code using functional approach is provided. The system includes obtaining a source code comprising one or more functions. Whole program interval analysis is performed over each function using a functional approach comprising a (i) one bottom-up analysis and (ii) a multi top-down analysis to identify range interval of each variable at every program point in the source code. Further, a summary for each function is computed and the summary of each function is stored in the form of variable and its corresponding range interval at every exit point of each function. Finally, an incremental interval analysis is performed over each function of the source code having edited version change, and recomputing summary for each function potentially impacted by change to optimize overall interval analysis.

In yet another aspect, there are provided one or more non-transitory machine-readable information storage mediums comprising one or more instructions which when executed by one or more hardware processors cause: include obtaining a source code comprising one or more functions. Whole program interval analysis is performed over each function using a functional approach comprising a (i) one bottom-up analysis and (ii) a multi top-down analysis to identify range interval of each variable at every program point in the source code. Further, a summary for each function is computed and the summary of each function is stored in the form of variable and its corresponding range interval at every exit point of each function. Finally, an incremental interval analysis is performed over each function of the source code having edited version change, and recomputing summary for each function potentially impacted by change to optimize overall interval analysis.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG.1 illustrates an exemplary system for source code interval analysis, in accordance with some embodiments of the present disclosure.
FIG.2 is a flowchart of an exemplary method to perform interval analysis in source code using functional approach using the system of FIG.1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

### GLOSSARY:

Static analysis tool refers to identify coding standards violations and other issues that can impact code quality.

Incremental interval is a range of numbers between two given numbers from minimum to maximum value.

Infinite-height domain refers to lattice with ascending chain. The ascending chain means that each element of sequence is higher in the lattice than the previous element. In the case of interval analysis, [0,2] (for example) is higher than [0,1] in the lattice because the latter interval is contained within the former. Given mathematical integers, this chain is clearly infinite.

Functional approach refers to processing functions in source code in particular order to solve complex problems. Functions take an input value and produce an output value without being affected by the program.

Call graph refers to a control-flow graph which represents calling relationships between subroutines in a computer program of source code.

Embodiments herein provide a method and system to perform interval analysis in source code using functional approach. The system enables providing a fast, reliable, efficient and scalable verification strategy to solve infinite height analysis. The method of the present disclosure provides a functional approach to handle analysis with infinite-height domains by performing (i) one bottom-up analysis and (ii) multi top-down analysis that traversals over call graph ensuring scalable analysis for practical applications. To satisfy the need for continuous integration (CI) or continuous deployment (CD) environment, the present disclosure extends functional approach to perform incremental analysis by selectively analyzing functions and report potentially impacted alarms due to change. The method is implemented using static analyzer tool as disclosed in applicants patent application No.201821021741 filed in India to evaluate whole program interval analysis to detect array index out of bounds, division by zero, and arithmetic overflow or underflow on four real-life automotive applications. The effectiveness of the method is demonstrated by validating crucial properties in real-life automotive applications. Furthermore, the approach seamlessly extends to incremental analysis of source code changes and shown effectiveness on practical evolved source code versions. Additionally, the method proves effective in solving the infinite-height domain analyses and speeds up the analysis on real-life applications. This further contributes to a reduction in the number of reported alarms.

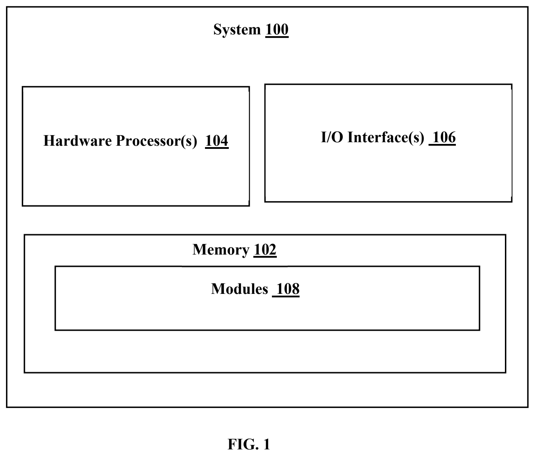

Referring now to the drawings, and more particularly to FIG.1 through FIG.2, where similar reference characters denote corresponding features consistently throughout the figures, there are shown preferred embodiments, and these embodiments are described in the context of the following exemplary system and/or method.

FIG.1 illustrates an exemplary system for source code interval analysis, in accordance with some embodiments of the present disclosure. In an embodiment, system 100 includes processor (s) 104, communication interface (s), alternatively referred as or input/output (I/O) interface(s) 106, and one or more data storage devices or memory 102 operatively coupled to the processor (s) 104. System 100, with the processor(s) is configured to execute functions of one or more functional blocks of the system 100.

Referring to the components of the system 100, in an embodiment, the processor (s) 104 can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 102 includes a plurality of modules 108 can also include various sub-modules where is it, which are they if not shown explicitly mention as depicted. The plurality of modules 108 includes programs or coded instructions that supplement applications or functions performed by the system 100 for executing different steps involved in the process of the system 100. The plurality of modules 108, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 108 can be used by hardware, by computer-readable instructions executed by the one or more hardware processors 104, or by a combination thereof.

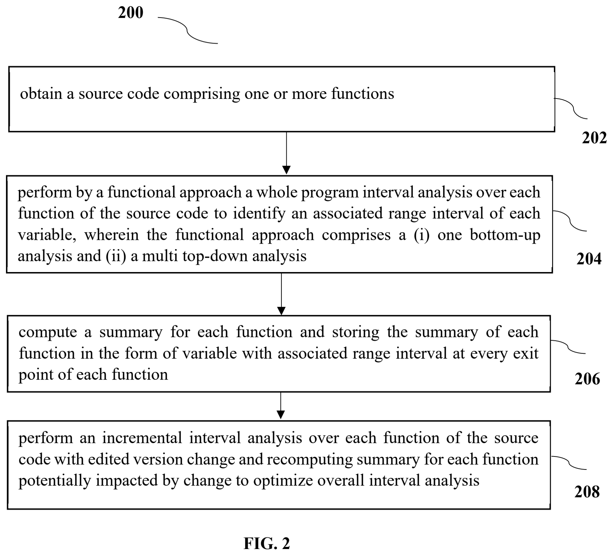

The memory 102 may comprise information pertaining to input(s)/output(s) of each step performed by the processor(s) 104 of the system 100 and methods of the present disclosure. Functions of the components of system 100, source code interval analysis using functional approach, are explained in conjunction with FIG.2 providing flow diagram, architectural overviews, and performance analysis of the system 100.

FIG.2 is a flowchart of an exemplary method 200 to perform interval analysis in source code using functional approach using the system of FIG.1, in accordance with some embodiments of the present disclosure. In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG.1, and the steps of flow diagram as depicted in FIG.2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 200, at step 202 the one or more hardware processors 104 is configured to obtain source code comprising one or more functions. For example, the source code is described in Table 1.

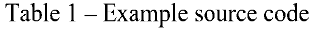

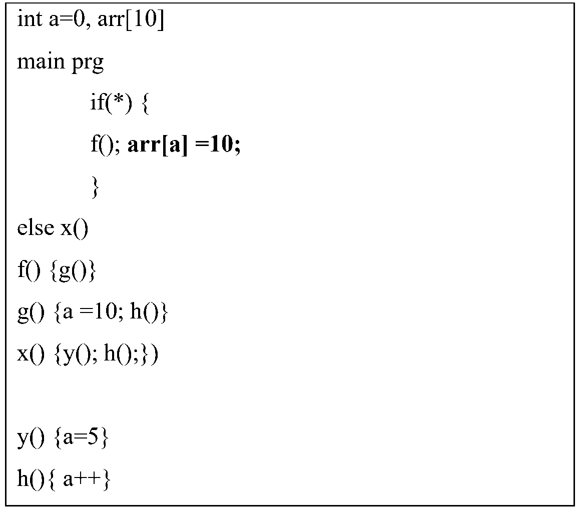

At step 204 of the method 200, the one or more hardware processors 104 is configured to perform by a functional approach a whole program interval analysis over each function of the source code to identify an associated range interval of each variable, wherein the functional approach comprises a (i) one bottom-up analysis and (ii) a multi top-down analysis

Example source code as described in (Table 1) is processed by executing whole program interval analysis over each function of the source code using the functional approach. One or more functions of the source code is executed with the functional approach sequentially with initially executing the one bottom-up analysis followed by the multi top-down analysis traversals over the call graph. Further, incremental interval analysis is performed for changed version of code over each function of changed version of the source code to identify intervals. Table 2 provides variable range interval information at entry and exit of function computed using whole program analysis.

**Table 2 - Variable range interval information at entry and exit of function**

| Functi on of source code | BU | TD1 | | TD2 | | TD3 | | TD4 | |
|---|---|---|---|---|---|---|---|---|---|
| | summ | entry | summ | entry | summ | entry | sum m | entry | summ |
| Main | a[m,M] | a[0,0] | a[m,M] | | | a[0, 0] | a[m, M] | a[0, 0] | a[6,1 1] |
| f | a[m,M] | a[0,0] | a[m,M] | | | a[0, 0] | a[6,1 1] | | |
| g | a[m,M] | a[0,0] | a[m,M] | a[0,0] | a[6,1 1] | | | | |
| x | a[m,M] | a[0,0] | a[m,M] | a[0,0] | a[6,1 1] | | | | |
| y | a[5,5] | a[0,0] | a[5,5] | | | | | | |
| h | a[m,M] | a[5,1 0] | a[6,11] | | | | | | |

Further, for the example described in Table 1 with variable information in Table 2 focus on single variable, *a*, which serves as an index of array at highlighted source code point of interest (PoI). The analysis information of the source code variable includes an interval of values with lower bounds and upper bounds. The overapproximated (universal) interval for each variable is defined by a lower bound (*m*) set to minimum value and an upper bound (*M*) set to maximum value permissible for the datatype. For example, variable of type signed char (size of 1 byte) will have universal interval as [-127,128]. Information at exit of each function is called summary (*summ*) and at variable entry of each function is called as entry.

Further, example source code (Table 1) is initially executed with the whole program interval analysis as described in Table 3 which begins with one bottom-up (BU) traversal over the call graph (BU) order of function in Table 2 - {*y, h, x, g, f, main*}. The BU order ensures that each function summary are available at every call point in the caller. Every function analysis starts by considering a universal interval [*m*, *M*] for every variable. After the BU traversal, the information present at function exit is shown in the BU column of Table 2 only function *y* has concrete interval information.

Subsequently the multi top-down (TD) analysis traversals is performed over the call graph. In the first top-down traversal (TD1), all functions obtain new entry information for variable a. As a result, all functions are analyzed. The TD1 column as described in Table 2. Table 2 shows entry and *summ* information at the end of *TD1* traversal. Note that, function *h*'s entry information incorporates values reaching from both call points of *h.* As only the summary of function h has changed in this iteration, the next traversal, TD2, focuses only on the caller of *h* (*i. e., g, x*). This pattern continues with TD3 and TD4 traversals, where functions {*f, main*} and only function {main} are analyzed, respectively. Since there are no callers of function main, a fixed point is reached, and no further top-down traversal is required. After TD4, variable *a* is found to have an interval [6,11], indicating a potential array index out of bound at the PoI.

The one bottom-up analysis and the multi top-down analysis involve bottom-up traversal considering universal entry information for each function. In the first top-down traversal entry information is updated for all functions, leading to the analysis of all functions. Subsequent top-down traversals focus on analysis of the callers of each function, triggered by changes in the summary information of those functions or when the entry information undergoes modifications during the traversal. The traversal stops when no modifications occur in any function summary or entry information, indicating a fixed point.

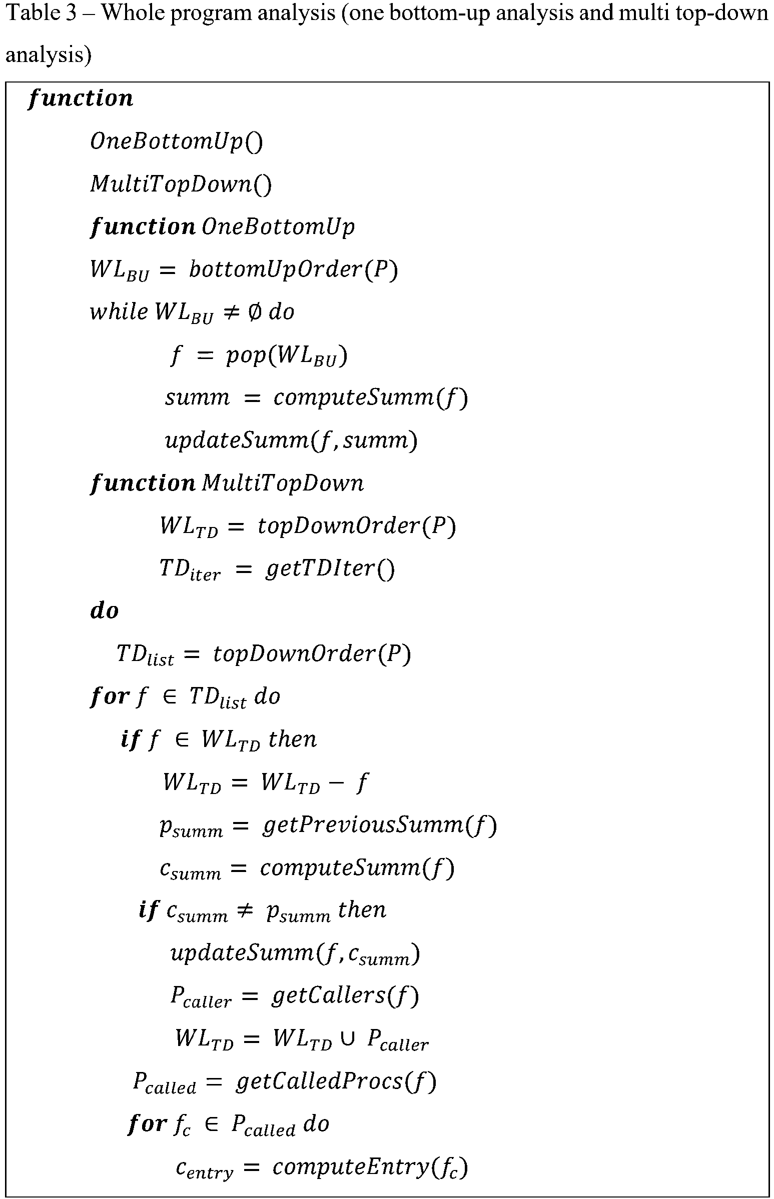

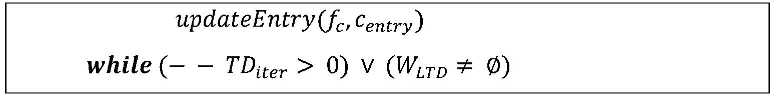

Table 3 describes the whole program analysis (WPA), considering the set *P* contains all the functions that can be called, directly or indirectly, from the entry point. *P* = {*f* | *f is a function reachable from the entry function in a callgraph* }.
Definition 1 (bottomUpOrder(P)) - The bottomUpOrder(P) denotes the order of each function in a call graph, progressing from the callees to the callers. In Table 1, bottomUpOrder is (*y, h, x, g, f, main*).
Definition 2 (topDownOrder(P)) - The topDownOrder(P) signifies the order of each function in the call graph, proceeding from the callers to the callees. In Table 1, the topDownOrder is (*main, f, x, g, h, y*).
Definition 3 (TDiter) - The TDiter signifies user-defined top-down iteration count.

Table 3 outlines the one bottom-up analysis. The one bottom-up analysis function collects functions in bottom-up order and traversal is performed from callees to callers. This traversal computes and stores summary information as it progresses. Here, each function is analyzed only once, even if it is called from multiple locations. The bottom-up traversal ensures that the summary of the called function is available at every call point in the caller.

The multi top-down approach function traverses multiple times in top-down order. It computes summary information for each function considering previously computed summary of the called functions from prior traversal. The first top-down iteration uses the summary computed by the one bottom-up analysis while subsequent iterations use the summary from the previous top-down iteration. If the computed summary for a function changes, its callers are analyzed in the next iteration. Additionally, in each top-down traversal, the entry function computes the entry information for the called function by applying Meet (conventional method) operation to the latest information present at the top of the call from all the call sites. The computed entry is set as the new entry of the called functions ensuring the function gets analyzed with the latest entry information when it is visited in the top-down traversal.

The analysis information remains sound after each bottom-up or the top-down traversal, enabling the user to set the number of top-down traversals (TDiter). The analysis concludes when either the TDiter count is reached or a fix-point is attained meaning there is no change in the summary of any function. Whole program interval analysis represents generalized functional approach featuring the one bottom-up analysis and the multi top-down analysis traversals over the call graph. Interval information for program variables is computed. Specifically, to compute the function summary it applies established data-flow equations and a widening operator for interval analysis. The key aspect lies in employing both bottom-up and multi top-down traversals for analyzing functions which proves effective in solving analysis problems with infinite-height such as interval analysis.

It is crucial to emphasize that after each iteration of the one bottom-up or the multi top-down traversal, the variables interval information is sound, and it becomes more precise with each subsequent iteration. This offers flexibility to decide number of times top-down traversal to be performed when analyzing large-scale applications. However, it is important to note that restricting top-down traversals instead of allowing it to reach a fixed point should be done with an awareness of the potential loss of precision. The ability to control the number of top-down traversals is facilitated by initial bottom-up traversal.

At step 206 of the method 200, the one or more hardware processors 104 is configured to compute a summary for each function and storing the summary of each function in the form of variable with associated range interval at every exit point of each function.

Finally, at step 208 of the method 200, the one or more hardware processors 104 is configured to perform an incremental interval analysis over each function of the source code with edited version change and recomputing summary for each function potentially impacted by change to optimize overall interval analysis.

Once the whole program interval analysis is executed over the source code from the above step, sequentially incremental interval analysis is performed to optimize the analysis of functions by selectively computing summaries for functions which are affected by the changes. The potential out of bound array index expression in Table 1 is corrected by changing the assignment to variable a in function g. The modified program, highlighting this change, is presented in Table 4.

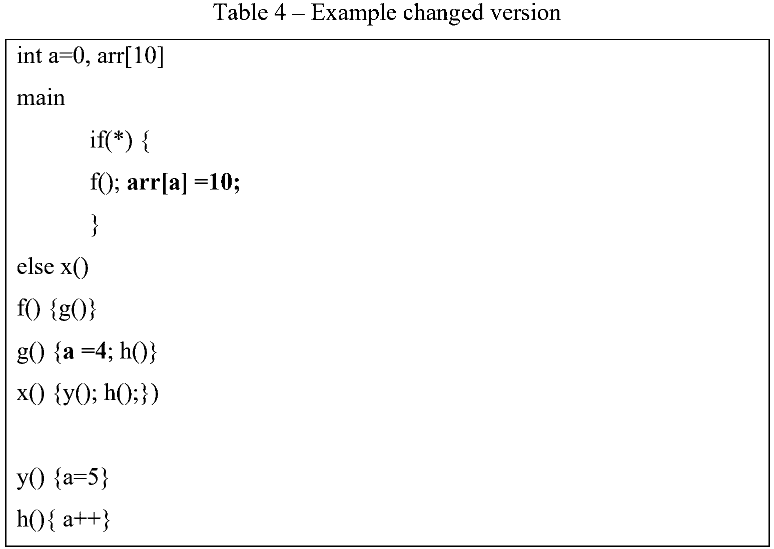

During the incremental interval analysis (IA), the process leverages two types of cached information from the previous version - (a) summary information for each function obtained after BU traversal, and (b) entry and *summ* for each function obtained after the last top-down traversal. The BU traversal initiates with the edited function g. Following the analysis of *g,* its summary is compared with the previous version summary after BU traversal. Since there is no change in the summary of *g,* there is no need to analyze its callers. The previous version summary after BU traversal is then utilized for further analysis. Table 5 showcases information related to *summ* and *entry* for the functions undergoing incremental analysis.

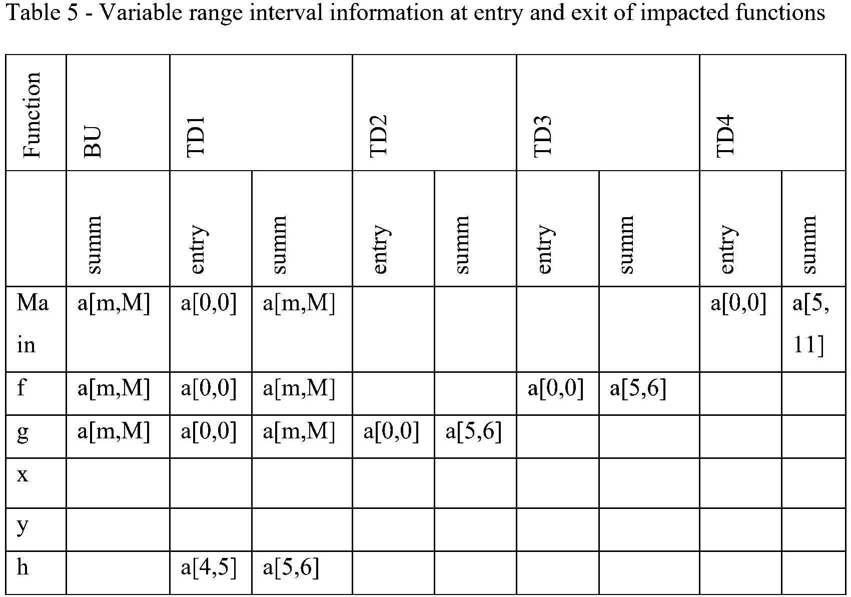

As indicated in Table 5, only the edited function *g* undergoes analysis in the BU traversal. It is noted that the modification in the assignment of variable *a* within function *g* does not impact the execution of functions *x* and *y*. Consequently, during subsequent top-down traversals, these functions are not analyzed. In the first top-down traversal (TD1) change in the summary of function *h* triggers the analysis of its caller *g* in TD2. Subsequently, functions *f* and main are analyzed in TD3 and TD4, respectively. By the end of TD4, variable *a* has an interval [5,6], ensuring the array index access at the PoI is safe. Thus, in this example, whole program analysis analyzed seventeen functions, but only eight were analyzed, incrementally.

In one embodiment incremental interval analysis, once the changes are identified in the source code, the functions are performed.

Definition 4 (Edited function) - The Function *Pₑ* represents the function being edited in the new version of the code function *g* in Table 4 is the edited function.

Definition 5 (UnReachFList) - The UnReachFList comprises two components: a) Functions that are unreachable on the control flow graph when traversed forward from the change point in the new version. b) Functions that neither directly nor indirectly call *Pₑ.* For instance, in Table 4, UnReachFList is (*x, y*). functions *h, f, and main* are not part of UnReachFList because the call to the function *h* is reachable from the modified assignment *a* = 4, and functions *f and main* are direct or indirect callers of the edited function *g*.

Definition 6 (Impacted Functions). Impacted Functions, *Pᵢ = P - UnReachFList* In Table 4, *Pᵢ* = (*main, f, g, h*). Table 6 outlines the incremental interval analysis approach for IA with respect to changes. It recomputes analysis information only for functions potentially impacted by the change utilizing cached analysis results from the previous version.

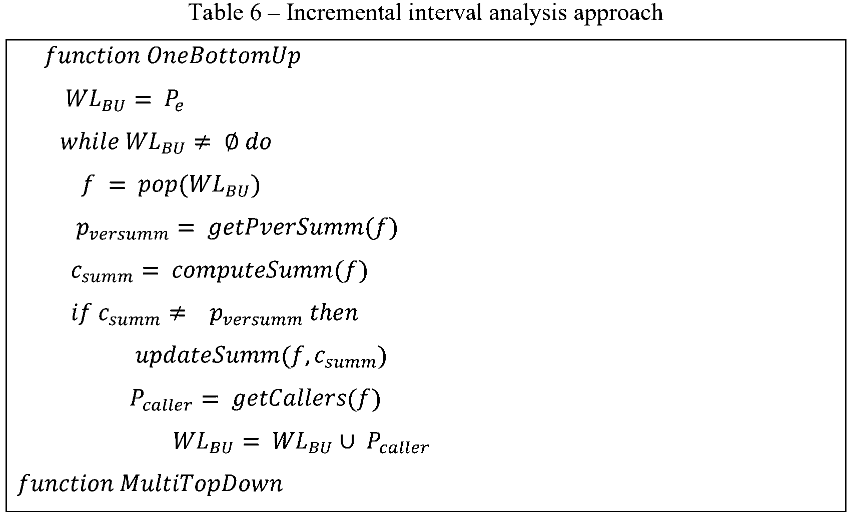

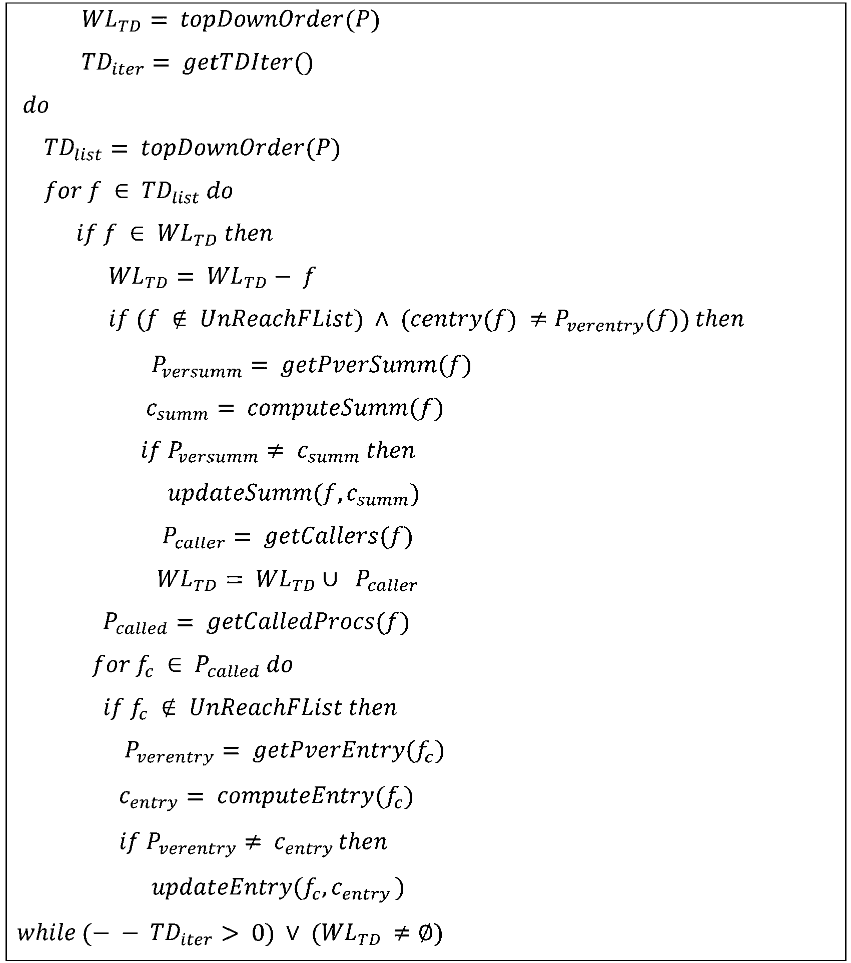

Incrementally, the one bottom-up analysis function begins analysis with the edited function *Pₑ* instead of the one bottom-up most function in the call graph. The analysis involves comparing the summary of the *Pₑ* with its cached summary from the previous version. If there is no change in the summary, the one bottom-up analysis stops, as the previous version summaries can be used as-is. However, if there is a change, the analysis extends to the callers of the *Pₑ* and their computed summaries are compared. This ensures that only functions potentially affected by the change are analyzed, minimizing unnecessary computation. During the multi top-down traversals function, it completely ignores the analysis of each function that are not reachable from the edited point (functions in UnReachFList). For these functions, the results from the previous version *(getPverSumm(f))* can be directly reused. Moreover, while analyzing reachable functions, the entry and summary information of each function are compared with the corresponding information from the previous version. If there is a match in the entry, the analysis of the function itself is avoided, and if the summary matches, the reanalysis of callers is skipped. This comparison not only reduces the number of functions being analyzed during the top-down traversal but also minimizes the overall number of top-down traversals needed to reach a fixed point. In Table 4 example, the incremental approach reduces the analysis workload by avoiding reanalysis of nine out of seventeen functions across the bottom-up and the top-down traversals of the call graph.

Experimental results provide analysis using the proprietary static program analysis tool. This tool utilizes Andersen's flow-insensitive pointer analysis to resolve function pointers during call graph construction. The data-flow equations for interval analysis and widening operator are implemented. The practical benefits of interval analysis of the present disclosure is demonstrated by utilizing interval analysis results to identify array index out of bound (AIOB), division by zero (ZD), and arithmetic overflow and underflow (ArithOFUF) properties over: a) Four automotive C applications: A1-A4 representing the protocol stack, braking systems, battery controller, and continuous variable transmission systems of a vehicle, respectively. b) Five consecutive versions of two open-source C applications: gzip (versions 1.5-1.9) and spell (versions 1.0-1.1). To compare timing and results of WPA and IA, we executed both analyses on every version of the code. However, due to the capability of incrementally analyzing code with respect to changes, WPA is only necessary for the first version (base version) of the code. The analysis engine preserves results for each version to support IA of the subsequent versions. The additional setup for IA is outlined below.

In one embodiment, two versions are mapped to establish the source code mapping between consecutive versions, GNU DiffUtils is utilized to generate a textual diff, ignoring superficial changes such as addition or deletion of blank lines. The output undergoes processing to create a mapping of source code line numbers, which is then used to construct a mapping between abstract syntax tree and symbol table nodes of the code in both versions. This mapping facilitates the identification of change points and the utilization of analysis information for unchanged code cached from the previous version. Only relevant changes are considered for validating user-specified properties - AIOB, ZD, and ArithOFUF. The method efficiently filters out irrelevant changes, minimizing incremental analysis overhead in the new code version. All experiments were conducted on a Windows 10 system with a 2.11 GHz Intel processor and 16 GB of RAM.

In one embodiment Table 7 summarizes experimental results for four automotive applications. Two consecutive versions of application A1 and A2 were available, whereas evolved application versions were not available for A3 and A4.

**Table 7 - Experimental results on automotive applications**

| Applications | | | WPA | | | IA | |
|---|---|---|---|---|---|---|---|
| Appl | KLoC | #Prop | #Alarms | %validated | Time | #Alarms | Time |
| A1 | 8 | 939 | 94 | 90 | 0.6 | 10 | 0.2 |
| A2 | 34 | 3987 | 346 | 91.3 | 6 | 0 | 1 |
| A3 | 60 | 4434 | 189 | 95.7 | 15 | - | - |
| A4 | 171 | 7755 | 309 | 96 | 21 | - | - |

Therefore, IA was performed only on the new versions of A1 and A2, but not on A3 and A4. For comparison with IA, the WPA result for A1 and A2 are on their new versions. Results as described in Table 7 shows "% Validated" indicating that, on an overall 271 KLoC, an average 93.2% properties were correctly validated (marked safe), indicating those array accesses were within bounds, division expressions were non-zero and no overflow/underflow in those arithmetic expressions. This demonstrates practical applicability of the method and system disclosed herein. Of the 938 (7.8%) properties flagged as potential alarms in automotive applications, manual analysis revealed all were false alarms. Due to unavailability of well-known tools to evaluate industrial applications, could not compare the false positive rate with them on these applications. Importantly, incremental interval analysis on evolved versions of A1 and A2 able to eliminate these false alarms as those were not impacted by the change, hence, user need not review them again, saving significant user effort. Further, incremental analysis of application A1 and A2 have taken significantly less analysis time (%Improvement- A1 : 66,A2 : 83) than WPA analysis. In the A1 new version two changes were made in two functions - one in a condition expression and another in a local array initialization. This resulted in reanalysis of only four functions during IA. In the A2 new version, a single change was made in feedback-code assignment, this change led to reanalysis of three functions, as it did not affect the summary of caller of the edited function *Pₑ* nor any reachable function from the *Pₑ.*

To further evaluate the efficacy of the incremental interval analysis on additional applications, experiments were conducted on five versions of two open-source applications. Table 8 summarizes the results of these experiments. Analysis time includes the end-to-end validation time for all properties. IA analysis time additionally includes version mapping and relevant change identification time. Table 8 illustrates the percentage reduction in reported alarms. False alarms reported on the first version of the code continue to be reported if WPA of subsequent evolved version is performed.

**Table 8 - Experimental Results**

| Applicatio n Details | | | V2 Details | | | | | | V2 WPA | | V2 IA | | % Improve ment |
|---|---|---|---|---|---|---|---|---|---|---|---|---|---|
| A P P | V 1 | V 2 | KL oC | # P | # Pe | #P re | # Pt | Ti me (mi n) | #Alar ms | Ti me (mi n) | #Alar ms | Ti me (mi n) | #Alarms |
| | 1. 5 | 1. 6 | 11. 2 | 1 0 4 | 5 | 3 | 3 0 | 11 | 438 | 4.6 | 200 | 58. 1 | 54.3 |
| g z i P | 1. 6 | 1. 7 | 11. 5 | 1 0 8 | 18 | 14 | 9 2 | 13 | 441 | 12. 3 | 401 | 5 | 9.1 |
| | 1. 7 | 1. 8 | 11. 5 | 1 0 8 | 1 | 0 | | 12. 6 | 441 | | | | |
| s p e l l | 1. 8 | 1. 9 | 11. 4 | 1 1 0 | 8 | 1 | 1 5 | 11. 5 | 442 | 2.9 | 21 | 74 | 95.2 |
| | 1 | 1. 1 | 2.1 | 1 4 | 8 | 4 | 5 | 2.2 | 12 | 0.5 | 6 | 78 | 50 |

As incremental analysis focuses on reporting alarms only from functions potentially affected by the change, it shows a drastic reduction in the number of alarms being reported. Industry applications A1 and A2 have shown an 85% and 100% reduction in reported alarms, respectively. In three open-source applications (gzip- 1.6, 1.9, and spell-1.1) with moderate impact of change, there is an average 66.5% reduction in alarms. Notably, gzip-1.9 sees a maximum reduction of 95%. This decrease in alarms is beneficial for static analysis users, as it reduces their effort of re-reviewing reported false alarms from previous versions and significantly streamlines the review process, enabling focus on alarms generated due to the impact of the change.

Correctness of reported alarms: To verify correctness, we compare WPA results on changed versions with IA. Further, WPA on V2 is executed to record alarms. These alarms are compared with WPAs. Experiments confirm IA yields identical results to the WPA across all versions. Further, incremental reporting ensures that no potential alarms are missing as we report alarms from all impacted functions (Definition 6).

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of source code analysis. The embodiment, thus provides method and system to perform interval analysis is source code using functional approach. Moreover, the embodiments herein further provides data-flow analysis using functional approach to solve infinite-height analyses, such as interval analysis. The method utilizes function summaries and employs a combination of one bottom-up analysis and multi top-down traversals over the call graph. The approach is further extended to enable incremental analysis for code changes by selectively analyzing only affected functions. The incremental interval analysis is evaluated using proprietary static analysis tool. The analysis results of interval analysis are used to validate properties such as array index within bounds, non-zero division, and the prevention of arithmetic overflow/underflow on real-life applications. Our evaluation shows that 93% properties on four automotive applications are successfully validated. Additionally, incremental interval analysis approach yields up to 83% reduction in analysis time and a significant reduction in reported alarms in comparison to whole program analysis, demonstrating its practical benefit on real-world evolving applications.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200) to perform interval analysis, the method comprising:
obtaining (202) via one or more hardware processors, a source code comprising one or more functions;
performing (204) by a functional approach via the one or more hardware processors, a whole program interval analysis over each function of the source code to identify an associated range interval of each variable, wherein the functional approach comprises a (i) one bottom-up analysis and (ii) a multi top-down analysis;
computing (206) via the one or more hardware processors, a summary for each function and storing the summary of each function in the form of variable with associated range interval at every exit point of each function; and
performing (208) via the one or more hardware processors, an incremental interval analysis over each function of the source code with edited version change, and recomputing summary for each function potentially impacted by change to optimize overall interval analysis.

2. The processor-implemented method as claimed in claim 1, wherein the functional approach over each function is executed by applying the one bottom-up analysis followed by the multi top-down analysis.

3. The processor-implemented method as claimed in claim 1, wherein the one bottom-up approach is performed by traversing the functions in an order from callees to caller by executing the steps of:
obtaining the range interval of each variable accessed in each function of the source code by performing traversal from callees to caller;
computing a summary for each function and storing summaries in the form of variables with corresponding range interval; and
utilizing the stored summary of called function at every call point through the caller by analyzing each function and updating the summary for each function.

4. The processor-implemented method as claimed in claim 1, wherein the multi top-down traversal is executed over call graph by traversing each function from caller to callee by performing the steps of:
obtaining the summary for each function using the called function summary from one bottom-up approach for initial top-down iteration, and for subsequent iterations, previously computed summary of the called functions from previous iteration and analyzing the callers in the next iteration for changes identified in the summary for each function;
computing a new entry of the called function by performing union of new information present at top of the call from all the callers of the called function; and
computing the new entry of the called function, ensuring that function gets analysed with the latest entry information when it is visited in the top-down traversal.

5. The processor-implemented method as claimed in claim 4, wherein the user sets a count of the top-down traversal and the analysis terminates when interval analysis reaches the count or a fix-point is attained which means there is no change in the summary of any function.

6. The processor-implemented method as claimed in claim 1, wherein the incremental interval analysis is performed over selected function impacted by changes executes the steps of:
analyzing each function of the edited version change source code by comparing summary of the edited function with cached summary from previous version, and (i) if no changes are identified in the summary, the bottom-up analysis is terminated and the previous version summaries are used, (ii) if there is a change, the analysis extends to the callers of edited function and their computed summaries are compared;
executing incremental multi top-down traversals analysis of each function that are not reachable from the edited point are ignored; and
analysing reachable functions, the entry and summary information of each function are compared with corresponding information from the previous version; and (i) if there is a match in the entry, the analysis of corresponding function is avoided, and (ii) if the summary matches, the reanalysis of callers are skipped.

7. A system (100), to perform interval analysis comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
obtain a source code comprising one or more functions;
perform by a functional approach a whole program interval analysis over each function of the source code to identify an associated range interval of each variable, wherein the functional approach comprises a (i) one bottom-up analysis and (ii) a multi top-down analysis;
compute a summary for each function and storing the summary of each function in the form of variable with associated range interval at every exit point of each function; and
perform an incremental interval analysis over each function of the source code with edited version change, and recomputing summary for each function potentially impacted by change to optimize overall interval analysis.

8. The system as claimed in claim 7, wherein the functional approach over each function is executed by applying the one bottom-up analysis followed by the multi top-down analysis.

9. The system as claimed in claim 7, wherein the one bottom-up approach is performed by traversing the functions in an order from callees to caller by executing the steps of:
obtaining the range interval of each variable accessed in each function of the source code by performing traversal from callees to caller;
computing a summary for each function and storing summaries in the form of variables with corresponding range interval; and
utilizing the stored summary of called function at every call point through the caller by analyzing each function and updating the summary for each function.

10. The system as claimed in claim 7, wherein the multi top-down traversal is executed over call graph of by traversing each function from caller to callee by performing the steps of:
obtaining the summary for each function using the called function summary from one bottom-up approach for initial top-down iteration, and for subsequent iterations, previously computed summary of the called functions from previous iteration and analyzing the callers in the next iteration for changes identified in the summary for each function;
computing a new entry of the called function by performing union of new information present at top of the call from all the callers of the called function; and
computing the new entry of the called function, ensuring that function gets analysed with the latest entry information when it is visited in the top-down traversal.

11. The system as claimed in claim 10, wherein the user sets a count of the top-down traversal and the analysis terminates when interval analysis reaches the count or a fix-point is attained which means there is no change in the summary of any function.

12. The system as claimed in claim 7, wherein the incremental interval analysis is performed over selected function impacted by changes executes the steps of:
analyzing each function of the edited version change source code by comparing summary of the edited function with cached summary from previous version, and (i) if no changes are identified in the summary, the bottom-up analysis is terminated and the previous version summaries are used, (ii) if there is a change, the analysis extends to the callers of edited function and their computed summaries are compared;
executing incremental multi top-down traversals analysis of each function that are not reachable from the edited point are ignored; and
analysing reachable functions, the entry and summary information of each function are compared with corresponding information from the previous version and (i) if there is a match in the entry, the analysis of corresponding function is avoided, and (ii) if the summary matches, the reanalysis of callers are skipped.

13. One or more non-transitory machine-readable information storage mediums comprising one or more instructions which when executed by one or more hardware processors cause:
Obtaining, a source code comprising one or more functions;
performing by a functional approach a whole program interval analysis over each function of the source code to identify an associated range interval of each variable, wherein the functional approach comprises a (i) one bottom-up analysis and (ii) a multi top-down analysis;
computing a summary for each function and storing the summary of each function in the form of variable with associated range interval at every exit point of each function; and
performing an incremental interval analysis over each function of the source code with edited version change, and recomputing summary for each function potentially impacted by change to optimize overall interval analysis.

14. The one or more non-transitory machine-readable information storage mediums of claim 13, wherein the functional approach over each function is executed by applying the one bottom-up analysis followed by the multi top-down analysis.

15. The one or more non-transitory machine-readable information storage mediums of claim 13, wherein the one bottom-up approach is performed by traversing the functions in an order from callees to caller by executing the steps of:
obtaining the range interval of each variable accessed in each function of the source code by performing traversal from callees to caller;
computing a summary for each function and storing summaries in the form of variables with corresponding range interval; and
utilizing the stored summary of called function at every call point through the caller by analyzing each function and updating the summary for each function.
